# EUROPEAN PATENT SPECIFICATION

(11) **EP 4 296 737 B1**
(45) Date of publication and mention of the grant of the patent: **06.08.2025**
(21) Application number: 22180908.0
(22) Date of filing: 24.06.2022
(51) Int. Cl.: G02B 6/38

(54) **OPTICAL-FIBER CONNECTOR**
GLASFASERSTECKER
CONNECTEUR DE FIBRE OPTIQUE

(43) Date of publication of application: 27.12.2023
(73) Proprietor: Acon Optics Communications Inc., New Taipai City 231 (TW)
(72) Inventor: WU, Jia-Rong, New Taipei City 231 (TW); HSU, Tsung-Yao, New Taipei City 231 (TW)
(74) Representative: Kuhnen & Wacker Patent- und Rechtsanwaltsbüro PartG mbB

(56) References cited:
- CH-A2- 705 532
- CN-U- 216 214 454
- US-A1- 2019 129 103
- US-B1- 6 357 934

## Description

### FIELD OF THE INVENTION

The instant disclosure relates to a connector, and more particular to an optical-fiber connector.

### BACKGROUND

The optical fiber is an tool for optical transmission. An optical-fiber connector is used for connecting the optical fiber with different electronic devices, so that the electronic devices can utilize the signals transmitted by the optical fiber. An optical-fiber connector assembly known to the inventor includes an adapter and a male optical-fiber connector. The adapter is assembled to the electronic device. Hence, when the male optical-fiber connector is inserted into the adapter, the male optical-fiber is fixed with the adapter and signals can be transmitted to the electronic device through the optical-fiber connector assembly. Owing that the size of the optical-fiber connectors is small, the optical-fiber connectors are widely applied in optical communication network, data network, or cable TV network.

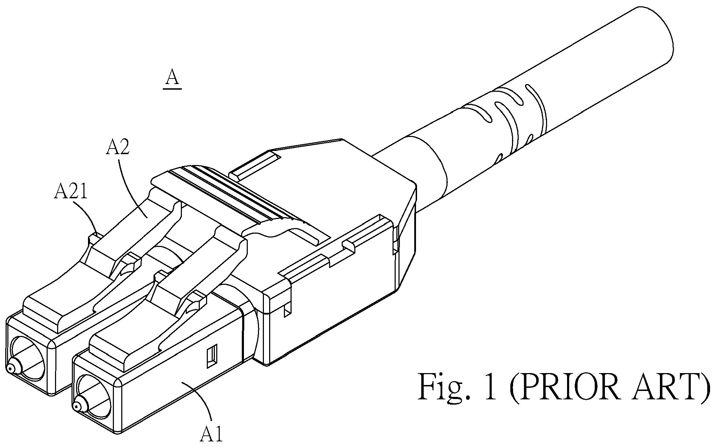

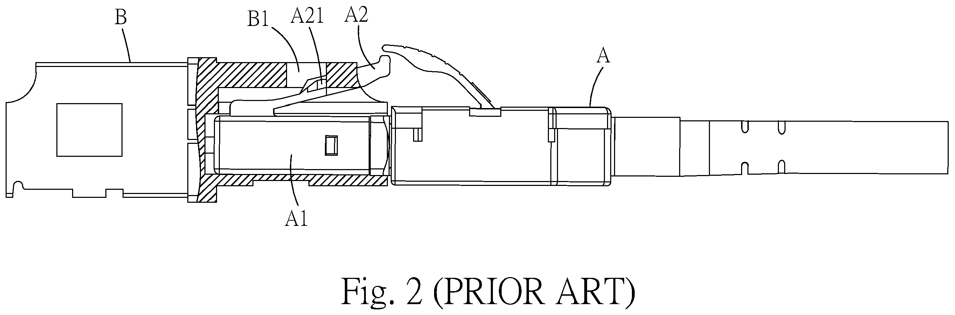

Please refer to Fig. 1 and Fig. 2. Fig. 1 illustrates a perspective view of an optical-fiber connector A known to the inventor, and Fig. 2 illustrates a lateral view showing that the optical-fiber connector A known to the inventor is mated with an adapter B. The male optical-fiber connector A known to the inventor has a housing A1 and an elastic arm A2 on the housing A1. The elastic arm A2 outwardly and inclinedly extends from a top portion of the housing A1. Two stopping blocks A21 are integrally formed on two sides of the elastic arm A2. The stopping blocks A21 are selectively engaged with or detached off a buckling hole B1 of the adapter B. However, because the elastic arm A2 and the stopping blocks A21 are of a one-piece member and made of plastic, the elastic arm A2 is prone to be broken upon being bent when the optical-fiber connector A is mating with the adapter B. The other related prior arts are recited in D1 (CH 705532A2), D2 (US 6357934B1), D3 (CN216214454U), and D4 (US 20190129103A1).

### SUMMARY OF THE INVENTION

In view of these, an embodiment of the instant disclosure provides an optical-fiber connector as disclosed in claim 1. Further embodiments are disclosed in the dependent claims 2-10.

Detailed description of the characteristics and the advantages of the instant disclosure are shown in the following embodiments. The technical content and the implementation of the instant disclosure should be readily apparent to any person skilled in the art from the detailed description, and the purposes and the advantages of the instant disclosure should be readily understood by any person skilled in the art with reference to content, claims, and drawings in the instant disclosure.

### BRIEF DESCRIPTION OF THE DRAWINGS

The instant disclosure will become more fully understood from the detailed description given herein below for illustration only, and thus not limitative of the instant disclosure, wherein:
Fig. 1 illustrates a perspective view of an optical-fiber connector known to the inventor;
Fig. 2 illustrates a lateral view showing that the optical-fiber connector known to the inventor is
Fig. 3 illustrates a perspective view of an optical-fiber connector according to some embodiments of the instant disclosure;
Fig. 4 illustrates a front exploded view of the optical-fiber connector according to some embodiments of the instant disclosure, where the core component is not detached off;
Fig. 5 illustrates a front exploded view of the optical-fiber connector according to some embodiments of the instant disclosure, where the core component is detached off;
Fig. 6 illustrates a rear exploded view of the optical-fiber connector according to some embodiments of the instant disclosure, where the core component is detached off;
Fig. 7 illustrates a perspective view of another pressing member according to some embodiments of the instant disclosure;
Fig. 8 illustrates an exploded view showing the optical-fiber connector and an adapter according to some embodiments of the instant disclosure;
Fig. 9 illustrates a schematic lateral view showing that the optical-fiber connector is mating with the adapter according to some embodiments of the instant disclosure;
Fig. 10 illustrates a schematic lateral view showing that the optical-fiber connector is mated with the adapter according to some embodiments of the instant disclosure;
Fig. 11 illustrates a perspective view of a single optical-fiber connector according to some embodiments of the instant disclosure;
Fig. 12 illustrates a perspective view of a metal retaining member according to some embodiments of the instant disclosure; and
Fig. 13 illustrates a schematic lateral view showing that the optical-fiber connector is mated with the adapter according to some embodiments of the instant disclosure.

### DETAILED DESCRIPTION

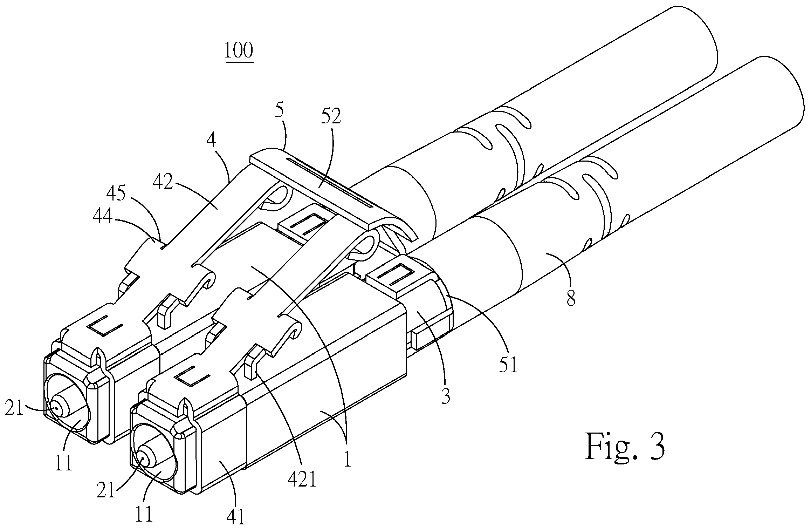

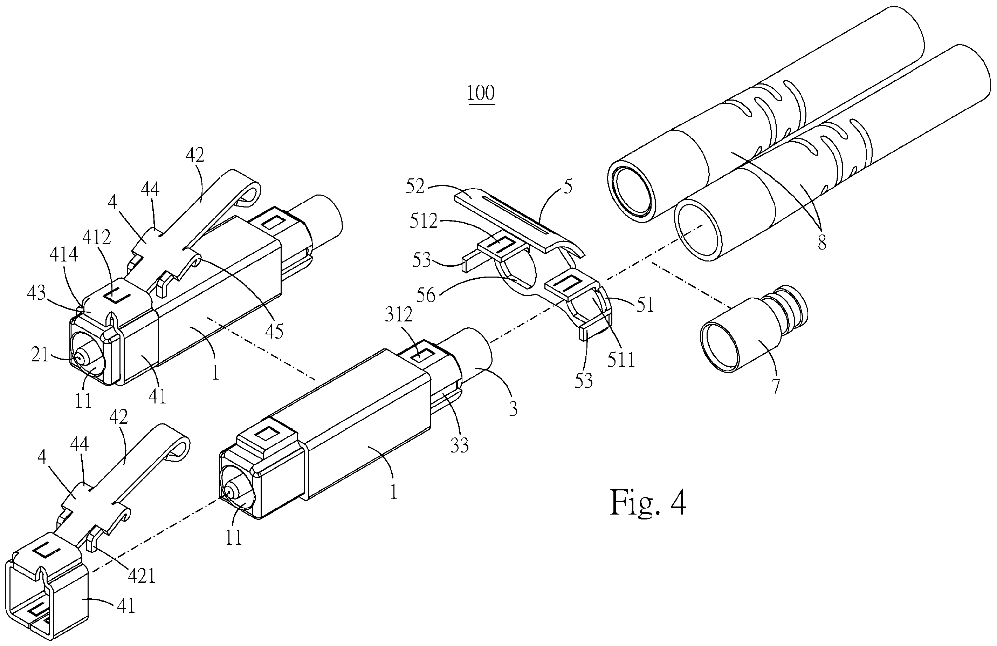

Please refer to Fig. 3. Fig. 3 illustrates a perspective view of an optical-fiber connector 100. In some embodiments, the optical-fiber connector 100 is adapted to be utilized in electrocommunication, interior wiring, industrial, military, aerospace, or medical devices. For example, upon applying the optical-fiber connector 100 in the aerospace field, the components of the airplane are connected with each other through the optical-fiber connector 100. In some embodiments, the optical-fiber connector 100 comprises a coupling member 1, a core component 2, a sleeve member 3, a metal retaining member 4, and a pressing member 5 (as shown in Fig. 4).

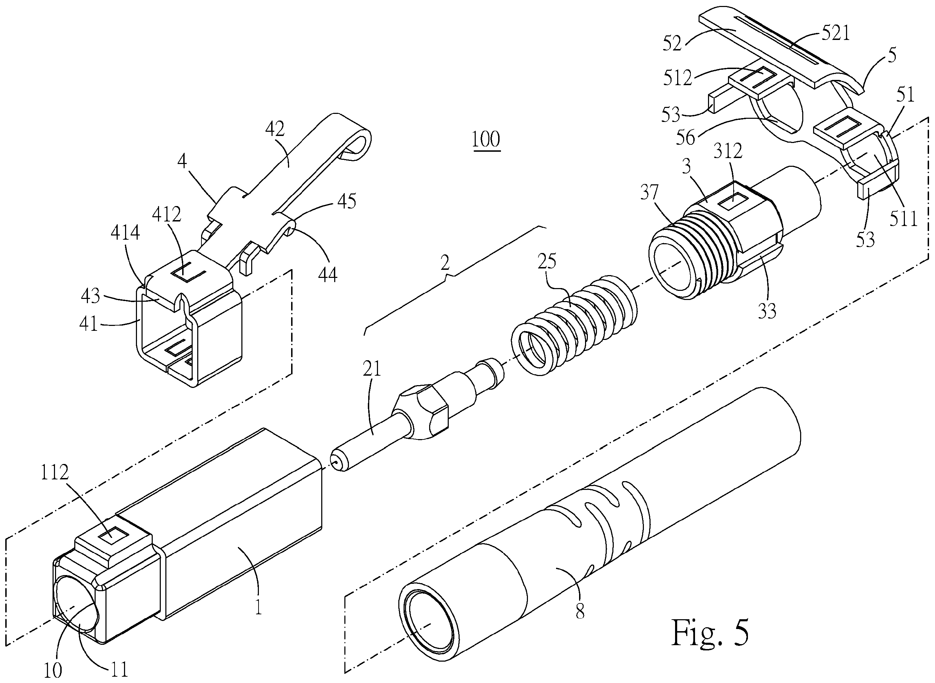

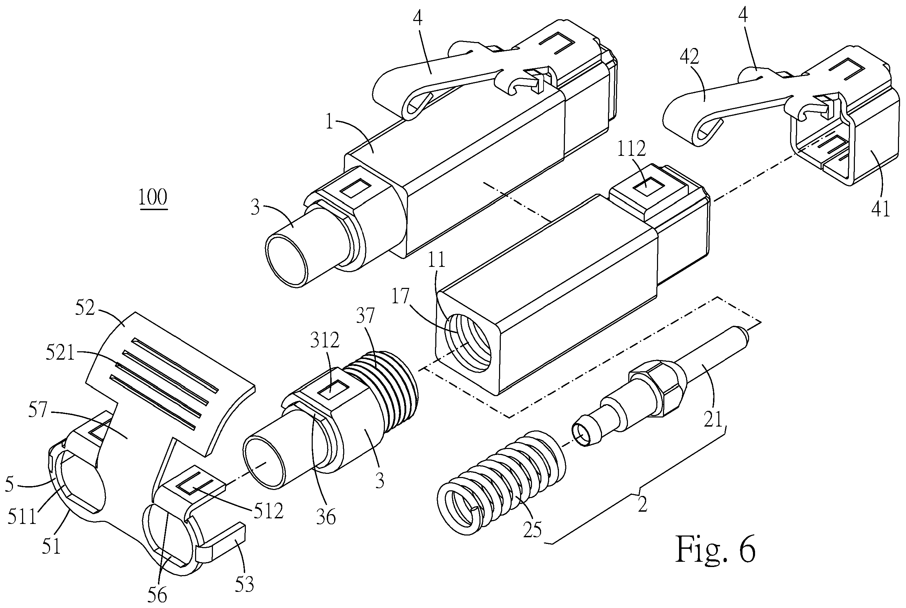

The coupling member 1 has a receiving space 10 (as shown in Fig. 5) and a plurality of openings 11. The openings 11 are at two ends of the coupling member 1 and in communication with the receiving space 10 (as shown in Fig. 5 and Fig. 6). The core component 2 is in the receiving space 10. The sleeve member 3 is connected to one of the openings 11. The metal retaining member 4 has a frame body 41 connected to one of the two ends of the coupling member 1. The frame body 41 is assembled to enclose the outer wall of the end of the coupling member 1. The metal retaining member 4 comprises an elastic arm 42 inclinedly extending toward the other end of the coupling member 1 from the frame body 41. Two sides of the elastic arm 42 have a plurality of retaining structures 44. The pressing member 5 has a mating portion 51 and a pressing portion 52. The mating portion 51 is fitted over the sleeve member 3. The pressing portion 52 extends toward the elastic arm 42 from the mating portion 51.

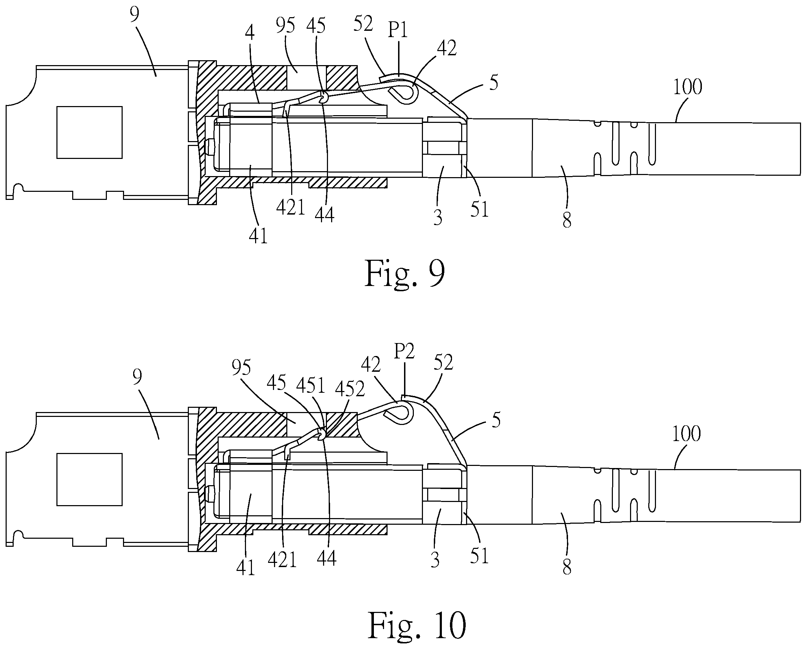

According to some embodiments, when the coupling member 1 is assembled with the metal retaining member 4, the optical-fiber connector 100 can be mated with an adapter 9 through the metal retaining member 4 which is completely made of metal (as shown in Fig. 9). The metal retaining member 4 is rigid and not fragile, thus prolonging the service life of the optical-fiber connector 100. Moreover, the metal retaining member 4 has high and low temperatures resistance.

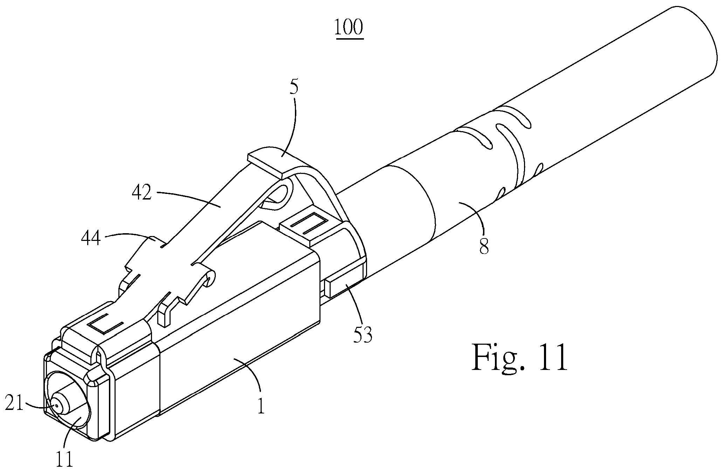

In some embodiments, the optical-fiber connector 100 comprises two coupling members 1 (as shown in Fig. 3), but embodiments are not limited thereto; in one embodiment, the optical-fiber connector 100 comprises a single coupling member 1 (as shown in Fig. 11) or comprises three or more coupling members 1. According to some embodiments, in the optical-fiber connector 100, two coupling members 1 are corresponding mated with one pressing member 5, but embodiments are not limited thereto; according to some embodiments, in the optical-fiber connector 100, one coupling member 1 is mated with one pressing member 5, or three or more coupling members 1 are correspondingly mated with one pressing member 5.

Please refer to Fig. 3. In some embodiments, the two coupling members 1 are respectively assembled with two core components 2, so that an optical-fiber connector 100 with a dual-core configuration is provided, thereby having the advantages of reduced wiring spaces.

Please refer to Fig. 3. In some embodiments, the optical-fiber connector 100 comprises two coupling members 1. The coupling members 1 are side-by-side arranged with each other. Each of the coupling members 1 is a rectangular structure. A gap is between the coupling members 1.

Please refer to Fig. 5 and Fig. 6. Fig. 5 illustrates a front exploded view of the optical-fiber connector 100, where the core component 2 is detached off. Fig. 6 illustrates a rear exploded view of the optical-fiber connector 100, where the core component 2 is detached off. In some embodiments, the core component 2 is in the coupling member 1. The core component 2 comprises an insertion pin 21 and a spring 25. The insertion pin 21 is at one of the openings 11. The insertion pin 21 is connected to a core member. The core member is made of a ceramic material for enclosing optical fiber cables, and the optical fiber cables are aligned with the core hole of the core member. The insertion pin 21 is at one of two ends of the core member. The sleeve member 3 is made of a metal material. One of two ends of the sleeve member 3 is fitted over the other end of the core member, and the other end of the sleeve member 3 is connected to a compressible member 7 (as shown in Fig. 4). The compressible member 7 is connected to a tail cap 8. The tail cap 8 is fitted over the transmission cable as a cover. The compressible member 7 is provided for increasing the assembling force between the optical-fiber connector 100 and the cover of the cable. Therefore, when a user pulls the cable with an excessive force, the optical-fiber connector 100 can be prevented from being detached off the cover of the cable easily. The sleeve member 3 is assembled at the rear end of the coupling member 1. The spring 25 is fitted over the other end of the core member, and the spring 25 is received in the sleeve member 3. One of two ends of the spring 25 abuts against the core member, and the other end of the spring 25 abuts against the sleeve member 3. The spring 25 allows the core member to have a buffering effect upon being forced.

Please refer to Fig. 5 and Fig. 6. In some embodiments, the mating portion 51 of the pressing member 5 is a circular ring. The mating portion 51 has a buckling hole 511. Each of two sides of an inner wall of the buckling hole 511 has a limiting portion 56. Each of two sides of the sleeve member 4 has a positioning portion 36. Each of the limiting portions 56 is connected to a corresponding one of the positioning portions 36. In some embodiments, the limiting portions 56 and the positioning portions 36 are flat structures corresponding to each other, so that the rotation of the sleeve member 3 with respect to the mating portion 51 can be prevented.

Please refer to Fig. 5 and Fig. 6. In some embodiments, the pressing portion 52 of the pressing member 5 is an arced elastic piece. The arced elastic piece is integrally formed with the mating portion 51, and the arced elastic piece extends to a top portion of the elastic arm 42 from a top portion of the mating portion 51.

Please refer to Fig. 6. In some embodiments, the pressing member 5 has a plurality of friction portions 521 adapted to be contacted by a hand. The friction portions 521 are on the pressing portion 52, and the pressing portion 52 contacts the top portion of the elastic arm 42. The friction portions 521 increase the friction force between the hand and the pressing portion 52, thereby increasing the operation feeling upon the user's hand pressing the pressing member 5.

Please refer to Fig. 5 and Fig. 6. In the embodiment according to the invention, the frame body 41 has a plurality of buckling portions 412 and a fixation block 43. The buckling portions 412 are protruding blocks at the inner surface of the frame body 41. An outer wall of the coupling member 1 has a plurality of engaging portions 112. The engaging portions 112 are recesses at the outer wall of the coupling member 1. Each of the buckling portions 412 is buckled with a corresponding one of the engaging portions 112. The fixation block 43 is limited at the outer wall of the coupling member 1. The fixation block 43 is a bent structure at the front end of the frame body 41. The fixation block 43 leans against the front end of the coupling member 1 to limit the movement of the coupling member 1. Therefore, through the fixation block 43, the frame body 41 can be prevented from being detached off the coupling member 1.

Please refer to Fig. 5 and Fig. 6. In some embodiments, the pressing member 5 has a fixation block 53. The fixation block 53 is on the mating portion 51. An outer wall of the sleeve member 3 has a fixation slot 33. The fixation block 53 is buckled with the fixation slot 33 to increase the structural strength of the optical-fiber connector 100. The fixation block 53 is a bent structure at a side portion of the mating portion 51. The fixation block 53 is limited in the fixation slot 33 to limit the movement of the pressing member 5 with respect to the sleeve member 3, so that the structural strength of the optical-fiber connector 100 can be increased.

Please refer to Fig. 5 and Fig. 6. In some embodiments, the pressing member has a buckling portion 512. The buckling portion 512 is on the mating portion 51. The outer wall of the sleeve member 3 has an engaging portion 312. The buckling portion 512 is a protruding block at the inner surface of the mating portion 51. The engaging portion 312 is a recess at the outer wall of the sleeve member 3. The buckling portion 512 is buckled with the engaging portion 312 to limit the movement of the pressing member 5 with respect to the sleeve member 3.

Please refer to Fig. 6. In some embodiments, the coupling member 1 has a connection portion 17. The connection portion 17 is at an inner wall of the receiving space 10 and adjacent to one of the openings 11. The sleeve portion 3 has a joint portion 37, and the connection portion 17 is connected to the joint portion 37. In some embodiments, the connection portion 17 is a female thread, the joint portion 37 is a male thread, and the inner thread is threaded with the outer thread, but embodiments are not limited thereto. In some embodiments, the connection portion 17 and the joint portion 37 may be convex and concave structures mated with each other, or the connection portion 17 and the joint portion 37 may be mated with each other through an interference-fitting manner.

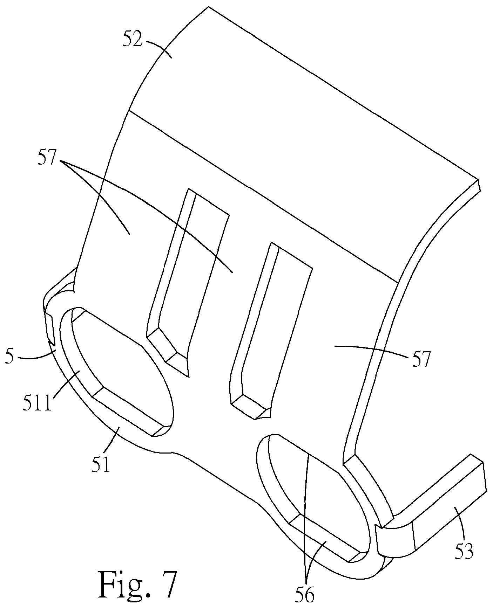

In some embodiments, the pressing member 5 has an extension portion 57. The extension portion 57 is between the pressing portion 52 and the mating portion 51. The extension portion 57 may be a single plate member (as shown in Fig. 6) or a plurality of plate members (as shown in Fig. 7).

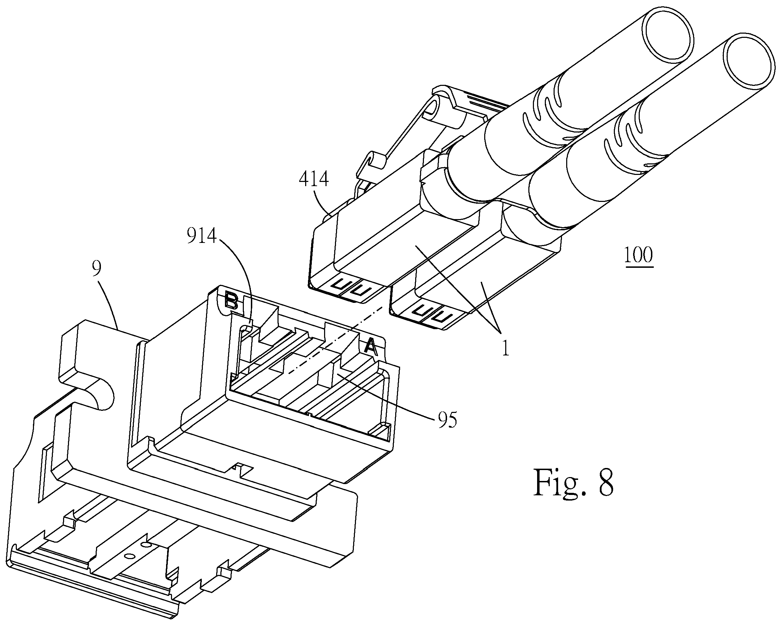

Please refer to Fig. 5 and Fig. 8. Fig. 8 illustrates an exploded view showing the optical-fiber connector 100 and an adapter 9. In some embodiments, each of two sides of the frame body 41 has a recessed portion 414, and each of the recessed portions 414 corresponds to a protrusion 914 on a corresponding one of two inner sides of the adapter 9.

Please refer to Fig. 9. In some embodiments, when the pressing portion 52 of the pressing member 5 is at a pressing position P1, the rear end of the elastic arm 42 is pushed downwardly by the pressing portion 52, so that the elastic arm 42 drives the retaining structure 44 to move downwardly and inside the adapter 9.

Please refer to Fig. 9. In some embodiments, each of the two sides of the elastic arm 42 has a limiting portion 421 adjacent to the outer wall of the coupling member 1. When the pressing portion 52 of the pressing member 5 is at the pressing position P1, each of the limiting portions 421 leans against the outer wall of the coupling member 1. Therefore, the distance of the downward movement of the elastic arm 42 can be limited within a certain value. Hence, the elastic arm 42 can be prevented from being pressed excessively and deformed, so that the elastic arm 42 can be prevented from providing a sufficient elastic force.

Please refer to Fig. 9. Fig. 9 illustrates a schematic lateral view showing that the optical-fiber connector 100 is mating with the adapter 9. In some embodiments, each of the retaining structures 44 has an arced protrusion 45 (which may also be a cone-shaped protrusion), and the retaining structures 44 extend outwardly from the two sides of the elastic arm 42. After the optical-fiber connector 100 is mated with the adapter 9, an outer arced surface 451 of the arced protrusion 45 of each of the retaining structures 44 contacts an inner wall of a corresponding one of the two connection slots 95 inside the adapter 9 in a line-contact manner (as shown in Fig. 10, through the line 452). Each of the arced protrusions 45 is firmly buckled with the corresponding connection slot 95, so that the optical-fiber connector 100 can be prevented from detaching off the adapter 9 easily. Moreover, the arced protrusion 45 also increases the structural strength of the metal retaining member 4.

In some embodiments, as shown in Fig. 10, from the cross-sectional view of the arced protrusion 45, the arced protrusion 45 is an arced structure in which the profile of the structure is more than a semicircle (or an ellipse), and such structure increases the structural strength of the arced protrusion 45. In some embodiments, the arced protrusion 45 shown in Fig. 10 is arced toward the coupling member 1 (arced downwardly), but embodiments are not limited thereto. In some embodiments, the arced protrusion 45 shown in Fig. 10 may be arced toward a direction away from the coupling member 1.

Please refer to Fig. 10. Fig. 10 illustrates a schematic lateral view showing that the optical-fiber connector 100 is mated with the adapter 9. In some embodiments, when the pressing portion 52 of the pressing member 5 is at an original position P2, a distance along the height direction is between the rear end of the elastic arm 42 and the outer surface of the coupling member 1, and the pressing portion 52 contacts a top portion of the rear end of the elastic arm 42. Hence, the elastic arm 42 is moved upwardly to its original position due to the resilient force applied to the elastic arm, 42 so that the elastic arm 42 drives the retaining structures 44 to move upwardly. Therefore, the arced protrusions 45 of the retaining structures 44 are buckled with the two connection slots 95 of the adapter 9, so that the optical-fiber connector 100 can be fixed inside the housing of the adapter 9.

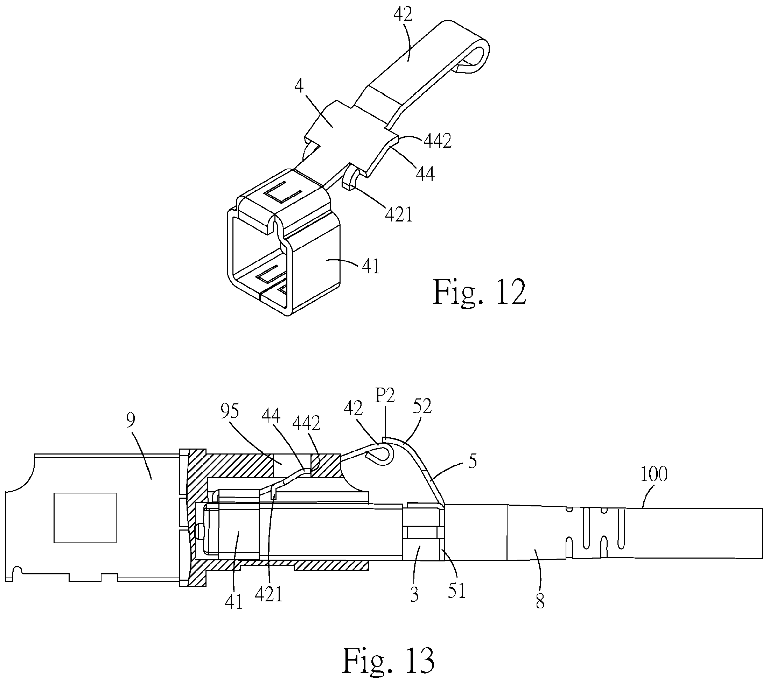

Please refer to Fig. 12 and Fig. 13. Fig. 12 illustrates a perspective view of a metal retaining member 4, and Fig. 13 illustrates a schematic lateral view showing that the optical-fiber connector 100 is mated with the adapter 9. In some embodiments, the retaining structures 44 extend outwardly from the two sides of the elastic arm 42. After the optical-fiber connector 100 is mated with the adapter 9, an end surface of each of the retaining structures 44 contacts an inner wall of a corresponding one of the two connection slots 95 inside the adapter 9 in a surface-contact manner (through the surface 422). The end surface of each of the retaining structures 44 is firmly buckled with the corresponding connection slot 95, so that the optical-fiber connector 100 can be prevented from detaching off the adapter 9 easily. Moreover, the retaining structures 44 also increases the structural strength of the metal retaining member 4.

According to some embodiments of the instant disclosure, the optical-fiber connector is buckled with the adapter through the metal retaining member which is made of metal, thereby prolonging the service life of the optical-fiber connector. Moreover, according to some embodiments, the two sides of the elastic arm of the metal retaining member have the arced protrusion, thus increasing the structural strength of the metal retaining member. Furthermore, according to some embodiments, a limiting portion is on the elastic arm to prevent the elastic arm from being pressed excessively and deformed.

## Claims

1. An optical-fiber connector (100), comprising:
a coupling member (1) having a receiving space (10) and a plurality of openings (11), wherein the openings (11) are at two ends of the coupling member (1) and in communication with the receiving space (10);
a core component (2) in the receiving space (10);
a sleeve member (3) connected to one of the openings (11);
a metal retaining member (4) having a frame body (41), wherein the frame body (41) is connected to one of the two ends of the coupling member (1), wherein the metal retaining member (4) comprises an elastic arm (42) inclinedly extending toward the other end of the coupling member (1) from the frame body (41), wherein two sides of the elastic arm (42) have a plurality of retaining structures (44), wherein the frame body (41) has a plurality of buckling portions (412) and a fixation block (43), wherein an outer wall of the coupling member (1) has a plurality of engaging portions (112), wherein each of the buckling portions (412) is buckled with a corresponding one of the engaging portions (112), and wherein the fixation block (43) is limited at the outer wall of the coupling member (1); and
a pressing member (5) having a mating portion (51) and a pressing portion (52), wherein the mating portion (51) is fitted over the sleeve member (3), and the pressing portion (52) extends toward the elastic arm (42) from the mating portion (51);
**characterized in that**
the frame body (41) is assembled to enclose the outer wall of the end of the coupling member (1) that it is connected to.

2. The optical-fiber connector (100) according to claim 1, wherein the retaining structures (44) extend outwardly from the two sides of the elastic arm (42), and each of the retaining structures (44) is adapted to contact an inner wall of a corresponding one of two connection slots (95) inside an adapter (9) in a surface (442)-contact manner.

3. The optical-fiber connector (100) according to claim 1, wherein each of the retaining structures (44) has an arced protrusion (45), and an outer arced surface (451) of each of the arced protrusions (45) is adapted to contact an inner wall of a corresponding one of two connection slots (95) inside an adapter (9) in a line (452)-contact manner.

4. The optical-fiber connector (100) according to claim 1, wherein each of the two sides of the elastic arm (42) has a limiting portion (421) adjacent to an outer wall of the coupling member (1); when the pressing portion (52) of the pressing member (5) is at a pressing position (P1), each of the limiting portions (421) leans against the outer wall of the coupling member (1).

5. The optical-fiber connector (100) according to claim 1, wherein the pressing member (5) has a plurality of friction portions (521) adapted to be contacted by a hand; the friction portions (521) are on the pressing portion (52), the pressing portion (52) contacts a top portion of the elastic arm (42), and the pressing member (5) has an extension portion (57) between the pressing portion (52) and the mating portion (51).

6. The optical-fiber connector (100) according to claim 1, wherein each of two sides of the frame body (41) has a recessed portion (414), and each of the recessed portions (414) corresponds to a protrusion (914) on a corresponding one of two inner sides of an adapter (9).

7. The optical-fiber connector (100) according to claim 1, wherein the pressing member (5) has a fixation block (53), the fixation block (53) is on the mating portion (51), an outer wall of the sleeve member (3) has a fixation slot (33), and the fixation block (53) is buckled with the fixation slot (33).

8. The optical-fiber connector (100) according to claim 1, wherein the pressing member (5) has a buckling portion (512), the buckling portion (512) is on the mating portion (51), an outer wall of the sleeve member (3) has an engaging portion (312), and the buckling portion (512) is buckled with the engaging portion (312).

9. The optical-fiber connector (100) according to claim 1, wherein the mating portion (51) has a buckling hole (511), each of two sides of an inner wall of the buckling hole (511) has a limiting portion (56), each of two sides of the sleeve member (3) has a positioning portion (36), and each of the limiting portions (56) is connected to a corresponding one of the positioning portions (36).

10. The optical-fiber connector (100) according to claim 1, wherein the coupling member (1) has a connection portion (17) at an inner wall of the receiving space (10) and adjacent to one of the openings (11), the sleeve member (3) has a joint portion (37), and the connection portion (17) is connected to the joint portion (37).

## Patentansprüche

1. Lichtwellenleiterkonnektor (100), aufweisend:
ein Verbindungselement (1) mit einem Aufnahmeraum (10) und einer Mehrzahl an Öffnungen (11), wobei die Öffnungen (11) sich an zwei Enden des Verbindungselements (1) und in Verbindung mit dem Aufnahmeraum (10) steht;
einen Kernbestandteil (2) in dem Aufnahmeraum (10);
ein Hülsenelement (3), das mit einer der Öffnungen (11) verbunden ist;
ein Metallhalteelement (4) mit einem Rahmenkörper (41), wobei der Rahmenkörper (41) mit einem der beiden Enden des Verbindungselements (1) verbunden ist, wobei das Metallhalteelement (4) einen elastischen Arm (42) aufweist, der in Richtung des anderen Endes des Verbindungselements (1) von dem Rahmenkörper (41) aus geneigt verläuft, wobei zwei Seiten des elastischen Arms (42) eine Mehrzahl an Haltestrukturen (44) aufweisen, wobei der Rahmenkörper (41) eine Mehrzahl an Knickabschnitten (412) und einen Befestigungsblock (43) aufweist, wobei eine Außenwand des Verbindungselements (1) eine Mehrzahl an Eingriffsabschnitten (112) aufweist,
wobei jeder der Knickabschnitte (412) mit einem entsprechenden von den Eingriffsabschnitten (112) geknickt ist, und wobei der Befestigungsblock (43) an der Außenwand des Verbindungselements (1) begrenzt ist; und
ein Drückelement (5) mit einem Passabschnitt (51) und einem Drückabschnitt (52), wobei der Passabschnitt (51) über dem Hülsenelement (3) befestigt ist, und wobei der Drückabschnitt (52) von dem Passabschnitt (51) aus in Richtung des elastischen Arms (42) verläuft;
**dadurch gekennzeichnet, dass**
der Rahmenkörper (41) zusammengesetzt ist, um die Außenwand des Endes des Verbindungselements (1) zu umschließen, mit dem er verbunden ist.

2. Lichtwellenleiterkonnektor (100) nach Anspruch 1, wobei die Haltestrukturen (44) von den beiden Seiten des elastischen Arms (42) aus nach außen verlaufen, und jede der Haltestrukturen (44) darauf ausgelegt ist, eine innere Wand eines entsprechenden von zwei Verbindungsslots (95) im Inneren eines Adapters (9) in einer Weise, die die Oberfläche (442) berührt, zu berühren.

3. Lichtwellenleiterkonnektor (100) nach Anspruch 1, wobei jede der Haltestrukturen (44) einen gebogenen Vorsprung (45) aufweist, und wobei eine äußere gebogene Oberfläche (451) von jedem der gebogenen Vorsprünge (45) darauf ausgelegt ist, eine innere Wand eines entsprechenden der beiden Verbindungsslots (95) im Inneren eines Adapters (9) in einer Weise, die eine Leitung (452) berührt, zu berühren.

4. Lichtwellenleiterkonnektor (100) nach Anspruch 1, wobei jede der beiden Seiten des elastischen Arms (42) einen Begrenzungsabschnitt (421) aufweist, der sich neben einer äußeren Wand des Verbindungselements (1) befindet; wobei, wenn sich der Drückabschnitt (52) des Drückelements (5) an einer Drückposition (P1) befindet, jeder der Begrenzungsabschnitte (421) gegen die äußere Wand des Verbindungselements (1) gelehnt ist.

5. Lichtwellenleiterkonnektor (100) nach Anspruch 1, wobei das Drückelement (5) eine Mehrzahl an Friktionsabschnitten (521) aufweist, die darauf ausgelegt sind, von einer Hand berührt zu werden; wobei die Friktionsabschnitte (521) sich auf dem Drückabschnitt (52) befinden, wobei der Drückabschnitt (52) einen oberen Abschnitt des elastischen Arms (42) berührt, und wobei das Drückelement (5) einen Verlängerungsabschnitt (57) zwischen dem Drückabschnitt (52) und dem Passabschnitt (51) aufweist.

6. Lichtwellenleiterkonnektor (100) nach Anspruch 1, wobei jede der beiden Seiten des Rahmenkörpers (41) einen vertieften Abschnitt (414) aufweist, und wobei jeder der vertieften Abschnitte (414) einem Vorsprung (914) auf einer entsprechenden von zwei inneren Seiten eines Adapters (9) entspricht.

7. Lichtwellenleiterkonnektor (100) nach Anspruch 1, wobei das Drückelement (5) einen Befestigungsblock (53) aufweist, wobei der Befestigungsblock (53) sich auf dem Passabschnitt (51) befindet, eine äußere Wand des Hülsenelements (3) einen Befestigungsslot (33) aufweist, und der Befestigungsblock (53) mit dem Befestigungsslot (33) geknickt ist.

8. Lichtwellenleiterkonnektor (100) nach Anspruch 1, wobei das Drückelement (5) einen Knickabschnitt (512) aufweist, wobei der Knickabschnitt (512) sich auf dem Passabschnitt (51) befindet, eine äußere Wand des Hülsenelements (3) einen Eingriffsabschnitt (312) aufweist, und der Knickabschnitt (512) mit dem Eingriffsabschnitt (312) geknickt ist.

9. Lichtwellenleiterkonnektor (100) nach Anspruch 1, wobei der Passabschnitt (51) ein Knickloch (511) aufweist, wobei jede der beiden Seiten einer inneren Wand des Knicklochs (511) einen Begrenzungsabschnitt (56) aufweist, jede der beiden Seiten des Hülsenelements (3) einen Positionierungsabschnitt (36) aufweist, und jeder der Begrenzungsabschnitte (56) mit einem entsprechenden von den Positionierungsabschnitten (36) verbunden ist.

10. Lichtwellenleiterkonnektor (100) nach Anspruch 1, wobei das Verbindungselement (1) einen Verbindungsabschnitt (17) an einer inneren Wand des Aufnahmeraums (10) und neben einer der Öffnungen (11) aufweist, wobei das Hülsenelement (3) einen verbundenen Abschnitt (37) aufweist, und der Verbindungsabschnitt (17) mit dem verbundenen Abschnitt (37) verbunden ist.

## Revendications

1. Connecteur à fibre optique (100), comprenant :
un élément de couplage (1) comportant un espace de réception (10) et une pluralité d'ouvertures (11), les ouvertures (11) étant situées aux deux extrémités de l'élément de couplage (1) et en communication avec l'espace de réception (10) ;
un composant central (2) dans l'espace de réception (10) ;
un élément de manchon (3) relié à l'une des ouvertures (11) ;
un élément de retenue métallique (4) comportant un corps de cadre (41), dans lequel le corps de cadre (41) est relié à l'une des deux extrémités de l'élément de couplage (1), dans lequel l'élément de retenue métallique (4) comprend un bras élastique (42) s'étendant de manière inclinée vers l'autre extrémité de l'élément de couplage (1) à partir du corps de cadre (41), dans lequel les deux côtés du bras élastique (42) comportent une pluralité de structures de retenue (44), dans lequel le corps de cadre (41) comporte une pluralité de parties de flambage (412) et un bloc de fixation (43), dans lequel une paroi extérieure de l'élément de couplage (1) comporte une pluralité de parties d'engagement (112), dans lequel chacune des parties de flambage (412) est flambée avec une partie d'engagement correspondante parmi les parties d'engagement (112), et dans lequel le bloc de fixation (43) est limité au niveau de la paroi extérieure de l'élément de couplage (1) ; et
un élément de pression (5) comportant une partie d'accouplement (51) et une partie de pression (52), dans lequel la partie d'accouplement (51) est montée sur l'élément de manchon (3), et la partie de pression (52) s'étend vers le bras élastique (42) à partir de la partie d'accouplement (51) ;
**caractérisé en ce que**
le corps de cadre (41) est assemblé de manière à entourer la paroi extérieure de l'extrémité de l'élément de couplage (1) auquel il est relié.

2. Le connecteur à fibre optique (100) selon la revendication 1, dans lequel les structures de retenue (44) s'étendent vers l'extérieur à partir des deux côtés du bras élastique (42), et chacune des structures de retenue (44) est adaptée pour entrer en contact avec une paroi intérieure d'une fente de connexion correspondante parmi deux fentes de connexion (95) à l'intérieur d'un adaptateur (9) de manière à entrer en contact avec la surface (442).

3. Le connecteur à fibre optique (100) selon la revendication 1, dans lequel chacune des structures de retenue (44) comporte une saillie arquée (45), et une surface arquée extérieure (451) de chacune des saillies arquées (45) est adaptée pour entrer en contact avec une paroi intérieure d'une fente de connexion correspondante parmi deux fentes de connexion (95) à l'intérieur d'un adaptateur (9) selon une configuration de contact en ligne (452).

4. Le connecteur à fibre optique (100) selon la revendication 1, dans lequel chacune des deux faces du bras élastique (42) comporte une partie de limitation (421) adjacente à une paroi extérieure de l'élément de couplage (1) ; lorsque la partie de pression (52) de l'élément de pression (5) se trouve dans une position de pression (P1), chacune des parties de limitation (421) s'appuie contre la paroi extérieure de l'élément de couplage (1).

5. Le connecteur à fibre optique (100) selon la revendication 1, dans lequel l'élément de pression (5) comporte une pluralité de parties de friction (521) adaptées pour être en contact avec une main ; les parties de friction (521) se trouvent sur la partie de pression (52), la partie de pression (52) est en contact avec une partie supérieure du bras élastique (42), et l'élément de pression (5) comporte une partie d'extension (57) entre la partie de pression (52) et la partie d'accouplement (51).

6. Le connecteur à fibre optique (100) selon la revendication 1, dans lequel chacun des deux côtés du corps de cadre (41) comporte une partie en retrait (414), et chacune des parties en retrait (414) correspond à une saillie (914) sur l'un des deux côtés intérieurs correspondants d'un adaptateur (9).

7. Le connecteur à fibre optique (100) selon la revendication 1, dans lequel l'élément de pression (5) comporte un bloc de fixation (53), le bloc de fixation (53) est situé sur la partie d'accouplement (51), une paroi extérieure de l'élément de manchon (3) comporte une fente de fixation (33), et le bloc de fixation (53) est flambée dans la fente de fixation (33).

8. Le connecteur à fibre optique (100) selon la revendication 1, dans lequel l'élément de pression (5) comporte une partie de flambage (512), la partie de flambage (512) se trouve sur la partie d'accouplement (51), une paroi extérieure de l'élément de manchon (3) comporte une partie d'engagement (312), et la partie de flambage (512) est flambée avec la partie d'engagement (312).

9. Le connecteur à fibre optique (100) selon la revendication 1, dans lequel la partie d'accouplement (51) comporte un trou de flambage (511), chacun des deux côtés d'une paroi interne du trou de flambage (511) comporte une partie de limitation (56), chacun des deux côtés de l'élément de manchon (3) comporte une partie de positionnement (36), et chacune des parties de limitation (56) est reliée à une partie correspondante parmi les parties de positionnement (36).

10. Le connecteur à fibre optique (100) selon la revendication 1, dans lequel l'élément de couplage (1) comporte une partie de connexion (17) au niveau d'une paroi intérieure de l'espace de réception (10) et adjacente à l'une des ouvertures (11), l'élément de manchon (3) comporte une partie d'assemblage (37), et la partie de connexion (17) est reliée à la partie d'assemblage (37).
